# EUROPEAN PATENT APPLICATION

(11) **EP 4 741 088 A1**
(43) Date of publication of application: **13.05.2026**
(21) Application number: 24867846.8
(22) Date of filing: 05.06.2024
(51) Int. Cl.: B23K 1/20, B23K 1/005

(54) **PRELIMINARY SOLDER FORMING METHOD AND PRELIMINARY SOLDER FORMING DEVICE**

(30) Priority: 20.09.2023 JP 2023152154
(71) Applicant: Hamamatsu Photonics K.K., Hamamatsu-shi, Shizuoka 435-8558 (JP)
(72) Inventor: MATSUMOTO, Satoshi, Hamamatsu-shi, Shizuoka 435-8558 (JP)
(74) Representative: Hoffmann Eitle
(86) International application number: PCT/JP2024/020543
(87) International publication number: WO 2025/062759

(57) **Abstract**

A pre-solder formation method is a method for forming pre-solder on an aluminum electrode formed of aluminum. The pre-solder formation method includes a placement step of placing solder on the aluminum electrode, and a joining step of joining the solder to the aluminum electrode by melting and solidifying the solder using a laser beam. In the joining step, the laser beam is irradiated so that an amount of energy of the laser beam irradiated to the aluminum electrode is larger than an amount of energy of the laser beam irradiated to the solder.

## Description

### Technical Field

One aspect of the present disclosure relates to a pre-solder formation method and a pre-solder formation apparatus.

### Background Art

For example, Patent Literature 1 describes a method of joining solder to an LSI chip by irradiating the solder disposed on the LSI chip with a laser beam.

### Citation List

### Patent Literature

[Patent Literature 1] Japanese Unexamined Patent Publication No. H9-237963

### Summary of Invention

### Technical Problem

When attempting to form pre-solder on an aluminum electrode using the method as described above, the solder may not be satisfactorily joined because the wettability of the aluminum electrode with respect to the solder is poor.

Accordingly, an object of one aspect of the present disclosure is to provide a pre-solder formation method and a pre-solder formation apparatus capable of satisfactorily forming pre-solder on an aluminum electrode.

### Solution to Problem

A pre-solder formation method according to one aspect of the present disclosure is [1] "a pre-solder formation method for forming pre-solder on an aluminum electrode formed of aluminum, the pre-solder formation method including: a placement step of placing solder on the aluminum electrode; and a joining step of joining the solder to the aluminum electrode by melting and solidifying the solder using a laser beam, wherein in the joining step, the laser beam is irradiated so that an amount of energy of the laser beam irradiated to the aluminum electrode is larger than an amount of energy of the laser beam irradiated to the solder."

In the joining step of this pre-solder formation method, the laser beam is irradiated so that the amount of energy of the laser beam irradiated to the aluminum electrode is larger than the amount of energy of the laser beam irradiated to the solder. Accordingly, the aluminum electrode can be heated before the solder, and the aluminum electrode can be in a heated state at the time when the solder melts. As a result, the wettability of the aluminum electrode with respect to the solder can be improved at the joining location with the solder, and the solder can be satisfactorily joined to the aluminum electrode. Therefore, with this pre-solder formation method, pre-solder can be satisfactorily formed on the aluminum electrode. Note that "the amount of energy of the laser beam irradiated to the aluminum electrode is larger than the amount of energy of the laser beam irradiated to the solder" includes a case where the amount of energy of the laser beam irradiated to the solder is zero (that is, the laser beam is not irradiated to the solder).

The pre-solder formation method according to one aspect of the present disclosure may be [2] "the pre-solder formation method according to [1], wherein in the joining step, all of the laser beam is irradiated to the aluminum electrode." In this case, the aluminum electrode can be stably heated, and the yield can be improved.

The pre-solder formation method according to one aspect of the present disclosure may be [3] "the pre-solder formation method according to [1], wherein in the joining step, a part of the laser beam is irradiated to the aluminum electrode, and a remaining part of the laser beam is irradiated to the solder." In this case, the aluminum electrode and the solder can be heated in a well-balanced manner, and the process can be shortened.

The pre-solder formation method according to one aspect of the present disclosure may be [4] "the pre-solder formation method according to any one of [1] to [3], wherein in the joining step, the laser beam is irradiated so that a center of the laser beam is located outside the solder." In this case, the laser beam can be easily irradiated so that the amount of energy of the laser beam irradiated to the aluminum electrode is larger than the amount of energy of the laser beam irradiated to the solder.

The pre-solder formation method according to one aspect of the present disclosure may be [5] "the pre-solder formation method according to any one of [1] to [4], wherein in the joining step, the laser beam is irradiated so that an area of the laser beam irradiated to the aluminum electrode is larger than an area of the laser beam irradiated to the solder." In this case, the laser beam can be easily irradiated so that the amount of energy of the laser beam irradiated to the aluminum electrode is larger than the amount of energy of the laser beam irradiated to the solder.

The pre-solder formation method according to one aspect of the present disclosure may be [6] "the pre-solder formation method according to any one of [1] to [5], wherein in the joining step, the laser beam is irradiated in a state where a pressing member disposed on a side opposite to the aluminum electrode with respect to the solder is in contact with the solder." In this case, the solder can be joined to the aluminum electrode more satisfactorily.

The pre-solder formation method according to one aspect of the present disclosure may be [7] "the pre-solder formation method according to [6], wherein the pressing member has transparency with respect to the laser beam, and in the joining step, the laser beam is irradiated to a surface of the aluminum electrode on which the solder is disposed, through the pressing member." In this case, the laser beam can be irradiated in a region overlapping the pressing member.

The pre-solder formation method according to one aspect of the present disclosure may be [8] "the pre-solder formation method according to any one of [1] to [7], wherein in the joining step, the laser beam is irradiated in a state where the solder is surrounded by a surrounding member when viewed from an irradiation direction of the laser beam." In this case, movement of the molten solder can be suppressed by the surrounding member, and the solder can be joined to the aluminum electrode more satisfactorily.

The pre-solder formation method according to one aspect of the present disclosure may be [9] "the pre-solder formation method according to [8], wherein the surrounding member is formed of epoxy glass or silicone." In this case, the thermal conductivity of the surrounding member can be lowered, and heat can be suppressed from escaping from the solder via the surrounding member. In addition, the heat resistance of the surrounding member can be enhanced, and the surrounding member can be suppressed from being damaged or the like due to the temperature during processing.

The pre-solder formation method according to one aspect of the present disclosure may be [10] "the pre-solder formation method according to [8] or [9], wherein the surrounding member has transparency with respect to the laser beam." In this case, since it is not necessary to irradiate the laser beam while avoiding the surrounding member, irradiation of the laser beam can be simplified.

The pre-solder formation method according to one aspect of the present disclosure may be [11] "the pre-solder formation method according to any one of [1] to [10], wherein in the joining step, the laser beam is irradiated in a state where a pressing member disposed on a side opposite to the aluminum electrode with respect to the solder is in contact with the solder and the solder is surrounded by a surrounding member when viewed from an irradiation direction of the laser beam, and the pressing member and the surrounding member are integrally formed." In this case, by using the pressing member and the surrounding member, the solder can be joined to the aluminum electrode more satisfactorily. In addition, since the pressing member and the surrounding member are integrally formed, the number of members can be reduced, and the working time can be shortened.

The pre-solder formation method according to one aspect of the present disclosure may be [12] "the pre-solder formation method according to any one of [1] to [11], wherein in the joining step, the laser beam is irradiated to a surface of the aluminum electrode on which the solder is disposed." In this case, the solder can be reliably joined to the aluminum electrode.

The pre-solder formation method according to one aspect of the present disclosure may be [13] "the pre-solder formation method according to any one of [1] to [11], wherein in the joining step, the laser beam is irradiated to a surface of the aluminum electrode on a side opposite to a surface on which the solder is disposed." In this case, since it is not necessary to irradiate the laser beam while avoiding the solder, irradiation of the laser beam can be simplified.

The pre-solder formation method according to one aspect of the present disclosure may be [14] "the pre-solder formation method according to any one of [1] to [13], wherein in the placement step, the solder containing flux is placed on the aluminum electrode." With this pre-solder formation method, even solder containing flux can be satisfactorily joined to the aluminum electrode.

A pre-solder formation apparatus according to one aspect of the present disclosure is [15] "a pre-solder formation apparatus for forming pre-solder on an aluminum electrode formed of aluminum, the pre-solder formation apparatus including: an irradiation unit that irradiates a laser beam; and a control unit that controls the irradiation unit, wherein the control unit causes the irradiation unit to irradiate the laser beam so that an amount of energy of the laser beam irradiated to the aluminum electrode is larger than an amount of energy of the laser beam irradiated to solder disposed on the aluminum electrode, thereby joining the solder to the aluminum electrode by melting and solidifying the solder." With this pre-solder formation apparatus, the solder can be satisfactorily joined to the aluminum electrode for the reason described above.

### Advantageous Effects of Invention

According to one aspect of the present disclosure, a pre-solder formation method and a pre-solder formation apparatus capable of satisfactorily joining solder to an aluminum electrode can be provided.

### Brief Description of Drawings

[FIG. 1] FIG. 1 is a configuration diagram of a pre-solder formation apparatus.
[FIG. 2] FIG. 2 is a cross-sectional view for describing a pre-solder formation method.
[FIG. 3] FIG. 3 is a flowchart for describing an operation of the pre-solder formation apparatus.
[FIG. 4] FIGS. 4(a) and 4(b) are diagrams for describing an irradiation position of a laser beam.
[FIG. 5] FIG. 5 is a cross-sectional view for describing a pre-solder formation method of a comparative example.
[FIG. 6] FIG. 6 is a cross-sectional view for describing a pre-solder formation method of a first modification example.
[FIG. 7] FIG. 7 is a cross-sectional view illustrating a state where solder is placed on flux.
[FIG. 8] FIG. 8 is a cross-sectional view for describing a pre-solder formation method of a second modification example.
[FIG. 9] FIG. 9 is a cross-sectional view for describing a pre-solder formation method of a third modification example.
[FIG. 10] FIG. 10 is a cross-sectional view for describing a pre-solder formation method of a fourth modification example.
[FIG. 11] FIG. 11 is a configuration diagram of a pre-solder formation apparatus of a fifth modification example.
[FIG. 12] FIG. 12 is a flowchart for describing an operation of the pre-solder formation apparatus of the fifth modification example.

### Description of Embodiments

Hereinafter, embodiments of the present disclosure will be described in detail with reference to the drawings. In the following description, the same reference numerals are used for the same or corresponding elements, and duplicate description is omitted.

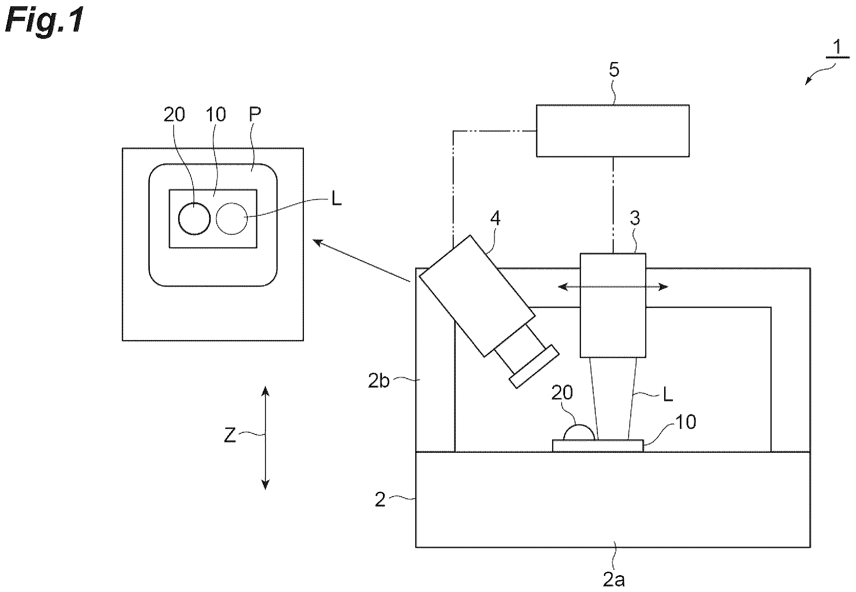

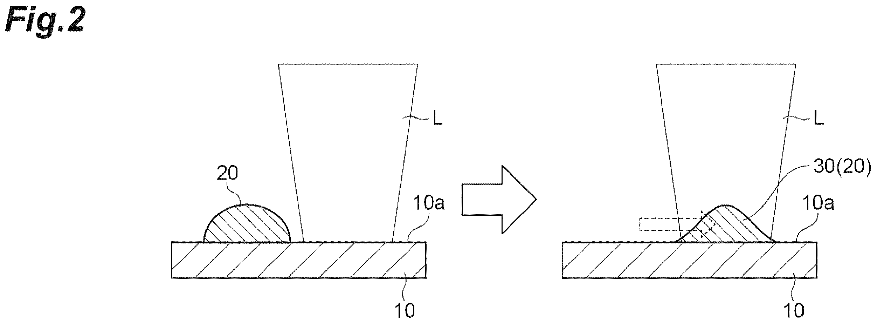

As illustrated in FIG. 1, a pre-solder formation apparatus 1 includes a frame 2, an irradiation head 3 (irradiation unit), a camera 4, and a control unit 5. The pre-solder formation apparatus 1 is an apparatus for forming pre-solder 30 (FIG. 2) on an aluminum electrode 10 formed of aluminum. The pre-solder 30 is solder formed in advance on the aluminum electrode 10 before joining with an object to be joined. At the time of soldering the aluminum electrode 10 and the object to be joined, for example, the pre-solder 30 may be melted and solidified to join the aluminum electrode 10 and the object to be joined, or solder may be further added onto the pre-solder 30 to join the aluminum electrode 10 and the object to be joined.

In the pre-solder formation apparatus 1, a laser beam L is irradiated from the irradiation head 3 to the aluminum electrode 10 disposed on the frame 2. The aluminum electrode 10 is formed, for example, in a rectangular plate shape. Solder 20 is disposed on the aluminum electrode 10, and by melting and solidifying the solder 20 using the laser beam L, the solder 20 is joined to the aluminum electrode 10, and the pre-solder 30 is formed on the aluminum electrode 10. Details of this joining step will be described later.

The frame 2 includes a base portion 2a and a cover portion 2b disposed on the base portion 2a. The frame 2 is formed in a box shape as a whole, and the base portion 2a constitutes a bottom wall portion thereof. The aluminum electrode 10 to be processed is disposed on the base portion 2a. Solder 20 is disposed on the aluminum electrode 10. This solder 20 is a solder material before being joined to the aluminum electrode 10. The solder 20 may be, for example, a solder paste in which a spherical metal material is covered with a resin material.

The irradiation head 3 irradiates the laser beam L toward the aluminum electrode 10. The irradiation head 3 is attached to the cover portion 2b of the frame 2 so as to be movable along an XY plane, for example. The XY plane is a plane perpendicular to a Z direction which is an irradiation direction of the laser beam L from the irradiation head 3. Note that it is sufficient that the irradiation head 3 and the base portion 2a are relatively movable along the XY plane with respect to each other, and the base portion 2a may be configured as a stage movable along the XY plane.

The camera 4 captures an image of the aluminum electrode 10 disposed on the base portion 2a. The camera 4 is attached to the cover portion 2b of the frame 2, for example. FIG. 1 shows an example of an image P acquired by the camera 4.

The control unit 5 is communicably connected to each element of the pre-solder formation apparatus 1 including the irradiation head 3 and the camera 4, and controls each element of the pre-solder formation apparatus 1. The control unit 5 is configured by a computer including, for example, a processor such as a CPU, and storage media such as RAM and ROM.

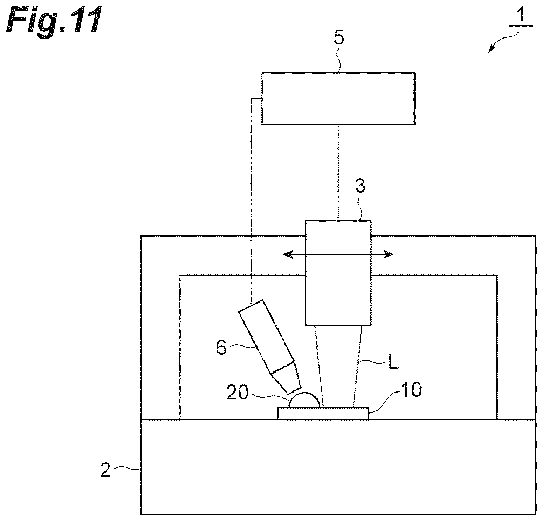

A pre-solder formation method performed by the pre-solder formation apparatus 1 will be described. First, the aluminum electrode 10 is disposed on the base portion 2a, and the solder 20 is disposed on the aluminum electrode 10 (placement step). The placement step can be performed, for example, by a predetermined working machine. In the placement step, the solder 20 may be disposed on the aluminum electrode 10 disposed on the base portion 2a, or the aluminum electrode 10 on which the solder 20 is disposed may be disposed on the base portion 2a. The solder 20 is disposed on the aluminum electrode 10 by, for example, a dispenser (a dispenser 6 illustrated in FIG. 11 to be described later).

Subsequently, the solder 20 is joined to the aluminum electrode 10 by melting and solidifying the solder 20 using the laser beam L (joining step, FIG. 2). More specifically, the solder 20 is melted by irradiation of the laser beam L, and then the solder 20 is cooled and solidified by stopping the irradiation of the laser beam L. In the joining step, the laser beam L is irradiated from the irradiation head 3. More specifically, the control unit 5 controls the irradiation head 3 to cause the irradiation head 3 to irradiate the laser beam L.

In the joining step, the laser beam L is irradiated so that the amount of energy of the laser beam L irradiated to the aluminum electrode 10 is larger than the amount of energy of the laser beam L irradiated to the solder 20. In this example, since the laser beam L is not irradiated to the solder 20, the amount of energy of the laser beam L irradiated to the solder 20 is zero. In this example, as illustrated in FIG. 2, at the start time of the joining step (in the state illustrated on the left side of FIG. 2), all of the laser beam L is irradiated to the aluminum electrode 10. In addition, the laser beam L is irradiated to a surface 10a of the aluminum electrode 10 on which the solder 20 is disposed.

Thus, in this example, the laser beam L is not irradiated to the solder 20, and all of the laser beam L is irradiated to the aluminum electrode 10. Accordingly, first, the aluminum electrode 10 is heated. Subsequently, the solder 20 is heated by heat from the aluminum electrode 10 and melts. As illustrated on the right side of FIG. 2, the molten solder 20 moves to a heated portion (irradiation portion of the laser beam L) of the aluminum electrode 10. The moved solder 20 solidifies at that portion and is joined to the aluminum electrode 10. Accordingly, the pre-solder 30 is formed on the aluminum electrode 10. In such a joining step, since the solder 20 easily wets the heated portion of the aluminum electrode 10, the solder 20 can be reliably joined to the aluminum electrode 10.

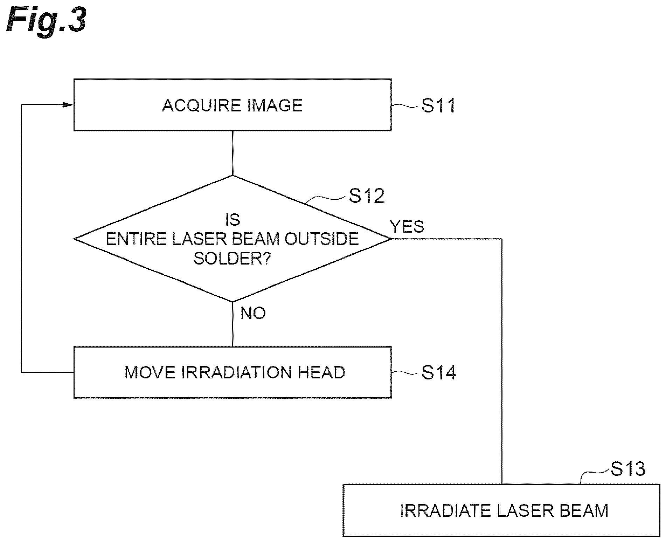

An operation of the pre-solder formation apparatus 1 in the joining step will be described with reference to FIG. 3. Each of the following operations is executed by the control unit 5 controlling each element of the pre-solder formation apparatus 1. First, the camera 4 acquires an image of the aluminum electrode 10 (step S11). Subsequently, the control unit 5 determines whether or not the entire scheduled irradiation region of the laser beam L is located outside the solder 20 based on the image acquired by the camera 4 (for example, by image processing) (step S12). As a result of the determination, when it is determined that the entire region is located outside the solder 20 (YES in step S12), the control unit 5 causes the irradiation head 3 to start irradiation of the laser beam L (step S13). On the other hand, when it is determined that at least a part of the region is located inside the solder 20 (NO in step S12), the control unit 5 moves the irradiation head 3 (step S14). Thereafter, the control unit 5 executes the process of step S11 again. As a result of the above processing, irradiation of the laser beam L is started in a state where all of the laser beam L is irradiated to the aluminum electrode 10.

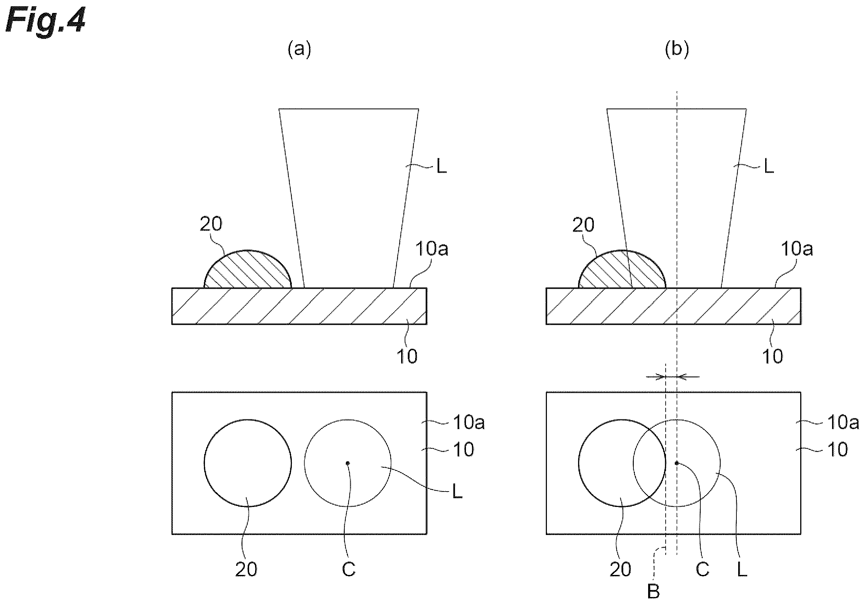

Here, an irradiation position of the laser beam L will be described with reference to FIG. 4. A cross-sectional view is shown on the upper side of FIGS. 4(a) and 4(b), and a plan view is shown on the lower side. As illustrated in FIG. 4(a), in the above-described example, all of the laser beam L is irradiated to the aluminum electrode 10. In FIG. 4(a), a center C of the laser beam L is located outside the solder 20 (solder 20 before melting) (solder 20 at the start time of the joining step). The center C is a center of an irradiation region (irradiation spot) of the laser beam L on the surface 10a of the aluminum electrode 10. In addition, in FIG. 4(a), in a plan view (when viewed from the Z direction), the area of the laser beam L irradiated to the aluminum electrode 10 is larger than the area of the laser beam L irradiated to the solder 20. Note that in this example, since the laser beam L is not irradiated to the solder 20, the area of the laser beam L irradiated to the solder 20 is zero. "The center of the laser beam is located outside the solder" means that the center of the laser beam is located outside a placement region of the solder. For example, when the solder 20 is circular as in the example of FIG. 4, it means that the center C of the laser beam L is located outside an outer peripheral edge of the solder 20, and when the solder 20 is annular, it means that the center C of the laser beam L is located outside the outer peripheral edge of the solder 20 or inside an inner peripheral edge.

The laser beam L may be irradiated as illustrated in FIG. 4(b). In FIG. 4(b), a part of the laser beam L is irradiated to the aluminum electrode 10, and a remaining part of the laser beam L is irradiated to the solder 20. Also in FIG. 4(b), the center C of the laser beam L is located outside the solder 20. Also in FIG. 4(b), in a plan view, the area of the laser beam L irradiated to the aluminum electrode 10 is larger than the area of the laser beam L irradiated to the solder 20.

As indicated by a broken line B in FIG. 4(b), the center C of the laser beam L may be located on an outer edge of the solder 20. Also in this case, in a plan view, the area of the laser beam L irradiated to the aluminum electrode 10 is larger than the area of the laser beam L irradiated to the solder 20.

In any of the cases described above, the amount of energy of the laser beam L irradiated to the aluminum electrode 10 is larger than the amount of energy of the laser beam L irradiated to the solder 20. These amounts of energy are proportional to the irradiation area of the laser beam L, for example, when the intensity distribution of the laser beam L is uniform. The amount of energy is a value obtained by integrating the intensity distribution of the laser beam L over the corresponding irradiation area of the laser beam L when the intensity distribution of the laser beam L is not uniform. The intensity distribution of the laser beam L may be a Gaussian distribution or a top-hat distribution (uniform distribution). Note that it is sufficient that the amount of energy of the laser beam L irradiated to the aluminum electrode 10 is larger than the amount of energy of the laser beam L irradiated to the solder 20, and unlike the examples of FIGS. 4(a) and 4(b), the center C of the laser beam L may be located inside the solder 20.

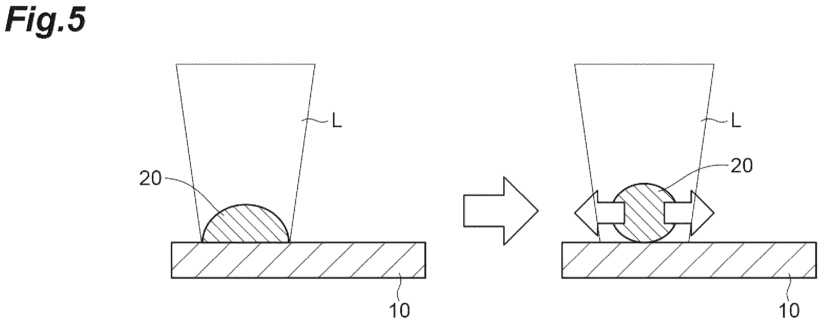

Advantages of the pre-solder formation method of the embodiment will be described with reference to a comparative example of FIG. 5. In the pre-solder formation method of the comparative example of FIG. 5, all of the laser beam L is irradiated to the solder 20. In this case, the amount of energy of the laser beam L irradiated to the aluminum electrode 10 is zero, which is smaller than the amount of energy of the laser beam L irradiated to the solder 20. Therefore, the solder 20 is heated first, and the solder 20 melts before the aluminum electrode 10 is heated. As a result, since the solder 20 does not easily wet the unheated aluminum electrode 10, as illustrated on the right side of FIG. 5, the solder 20 becomes spherical and moves on the aluminum electrode 10, and thus the solder 20 cannot be satisfactorily joined to the aluminum electrode 10. In addition, since a contact area between the solder 20 and the aluminum electrode 10 is small, it is difficult to heat the aluminum electrode 10 by heat from the solder 20, and the solder 20 cannot be satisfactorily joined also due to this. Note that the reason why the solder 20 becomes spherical as illustrated on the right side of FIG. 5 is that the free energy of the solder 20 is high.

The reason why the wettability of the aluminum electrode 10 with respect to the solder 20 is not good is the influence of a passive film formed on the surface of the aluminum electrode 10. When aluminum is placed in the atmosphere, a passive film made of aluminum oxide (Al₂O₃) is formed on the surface thereof. Due to the presence of this passive film, the solder does not easily wet the aluminum electrode.

For the purpose of solving the problem, the solder may contain flux for promoting soldering. The flux is contained in the solder for the purpose of removing the passive film formed on the surface of the aluminum electrode. However, even in this case, since it takes time to remove the passive film by the flux, the solder may melt before the passive film is removed, and the solder may become spherical and move on the aluminum electrode.

In this regard, as described above, in the pre-solder formation method of the embodiment, the aluminum electrode 10 is irradiated with the laser beam L, and the aluminum electrode 10 is heated (FIG. 2). Then, the solder 20 is heated by heat from the aluminum electrode 10 and melts. The molten solder 20 moves to the heated portion of the aluminum electrode 10 and solidifies. Since the solder 20 easily wets the heated portion of the aluminum electrode 10, the solder 20 can be reliably joined to the aluminum electrode 10. In addition, since the solder 20 moves (gathers) to the heated portion of the aluminum electrode 10, the solder 20 can be easily positioned.

### [Function and Effect]

In the pre-solder formation method of the embodiment, the laser beam L is irradiated so that the amount of energy of the laser beam L irradiated to the aluminum electrode 10 is larger than the amount of energy of the laser beam L irradiated to the solder 20. Accordingly, the aluminum electrode 10 can be heated before the solder 20, and the aluminum electrode 10 can be in a heated state at the time when the solder 20 melts. As a result, the wettability of the aluminum electrode 10 with respect to the solder 20 can be improved at a joining location with the solder 20, and the solder 20 can be satisfactorily joined to the aluminum electrode 10. Therefore, with the pre-solder formation method of the embodiment, the pre-solder 30 can be satisfactorily formed on the aluminum electrode 10. Note that "the amount of energy of the laser beam L irradiated to the aluminum electrode 10 is larger than the amount of energy of the laser beam L irradiated to the solder 20" includes a case where the amount of energy of the laser beam L irradiated to the solder 20 is zero (that is, the laser beam L is not irradiated to the solder 20).

In the joining step, all of the laser beam L is irradiated to the aluminum electrode 10. Accordingly, the aluminum electrode 10 can be stably heated, and the yield can be improved. That is, for example, compared to a case where only a part of the laser beam L is irradiated to the aluminum electrode 10, adjustment of the irradiation position of the laser beam L is easier, and the aluminum electrode 10 can be stably heated.

In the joining step, a part of the laser beam L may be irradiated to the aluminum electrode 10, and a remaining part of the laser beam L may be irradiated to the solder 20. In this case, the aluminum electrode 10 and the solder 20 can be heated in a well-balanced manner, and the process can be shortened.

In the joining step, the laser beam L is irradiated so that the center of the laser beam L is located outside the solder 20. Accordingly, the laser beam L can be easily irradiated so that the amount of energy of the laser beam L irradiated to the aluminum electrode 10 is larger than the amount of energy of the laser beam L irradiated to the solder 20. The pre-solder formation method of the embodiment is particularly effective when the intensity distribution of the laser beam L is a Gaussian distribution in which the light intensity at the central portion is high or a top-hat distribution in which the light intensity is uniform.

In the joining step, the laser beam L is irradiated so that the area of the laser beam L irradiated to the aluminum electrode 10 is larger than the area of the laser beam L irradiated to the solder 20. Accordingly, the laser beam L can be easily irradiated so that the amount of energy of the laser beam L irradiated to the aluminum electrode 10 is larger than the amount of energy of the laser beam L irradiated to the solder 20.

In the joining step, the laser beam L is irradiated to the surface 10a of the aluminum electrode 10 on which the solder 20 is disposed. Accordingly, the solder 20 can be reliably joined to the aluminum electrode 10.

The pre-solder formation apparatus 1 is an apparatus for forming the pre-solder 30 on the aluminum electrode 10 formed of aluminum. The pre-solder formation apparatus 1 includes the irradiation head 3 (irradiation unit) that irradiates the laser beam L, and the control unit 5 that controls the irradiation head 3. The control unit 5 causes the irradiation head 3 to irradiate the laser beam L so that the amount of energy of the laser beam L irradiated to the aluminum electrode 10 is larger than the amount of energy of the laser beam L irradiated to the solder 20 disposed on the aluminum electrode 10, so that the solder 20 is joined to the aluminum electrode 10 by being melted and solidified. With the pre-solder formation apparatus 1, solder can be satisfactorily joined to the aluminum electrode 10 for the reason described above.

### [Modification Examples]

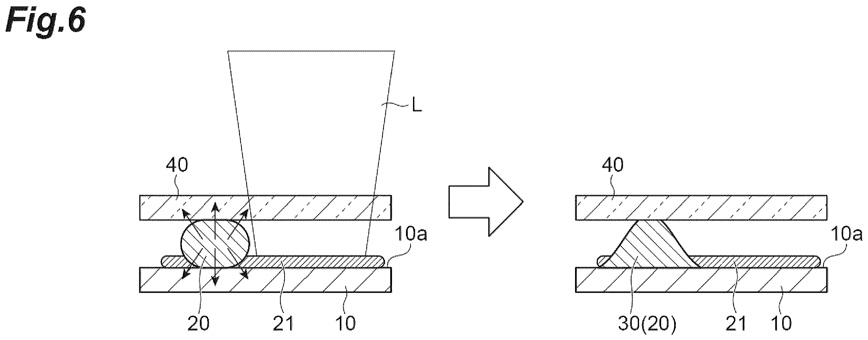

As in a first modification example illustrated in FIG. 6, in the joining step, the laser beam L may be irradiated in a state where a pressing member 40 disposed on a side opposite to the aluminum electrode 10 with respect to the solder 20 is in contact with the solder 20. The pressing member 40 is formed of a material having transparency with respect to the laser beam L. In this example, the pressing member 40 is formed in a plate shape from glass. In this example, the laser beam L is irradiated to the surface 10a of the aluminum electrode 10 via the pressing member 40 (by being transmitted through the pressing member 40). Also in the first modification example, all of the laser beam L is irradiated to the aluminum electrode 10. When the laser beam L is irradiated to melt the solder 20 in a state where the pressing member 40 is pressed against the solder 20, movement of the solder 20 can be restricted by the pressing member 40.

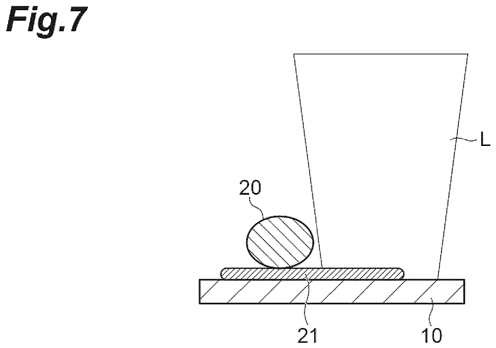

In addition, the pre-solder formation method of the first modification example can be suitably used when the solder 20 contains flux. As illustrated in FIG. 7, when the solder 20 contains flux 21, the solder 20 may rest on the flux 21, and the solder 20 may not be satisfactorily joined to the aluminum electrode 10.

On the other hand, as illustrated in FIG. 6, when the pressing member 40 is used, the heated solder 20 expands, and as its movement to the upper side in the figure is restricted by the pressing member 40, a force toward the lower side in the figure (toward the aluminum electrode 10) is applied to the solder 20. By this force, as illustrated in FIG. 6, the solder 20 can push aside the flux 21 and come into contact with the aluminum electrode 10, and the solder 20 can be satisfactorily joined to the aluminum electrode 10.

Also with the first modification example, similarly to the above embodiment, the pre-solder 30 can be satisfactorily formed on the aluminum electrode 10. In addition, since the laser beam L is irradiated in a state where the pressing member 40 disposed on the side opposite to the aluminum electrode 10 with respect to the solder 20 is in contact with the solder 20, the solder 20 can be joined to the aluminum electrode 10 more satisfactorily. In addition, the pressing member 40 has transparency with respect to the laser beam L, and in the joining step, the laser beam L is irradiated to the surface 10a of the aluminum electrode 10 on which the solder 20 is disposed via the pressing member 40. This allows the laser beam L to be irradiated in a region overlapping the pressing member 40. In addition, even the solder 20 containing the flux 21 can be satisfactorily joined to the aluminum electrode 10. Note that also in the joining step of the first modification example, similarly to the above embodiment, a part of the laser beam L may be irradiated to the aluminum electrode 10, and a remaining part of the laser beam L may be irradiated to the solder 20.

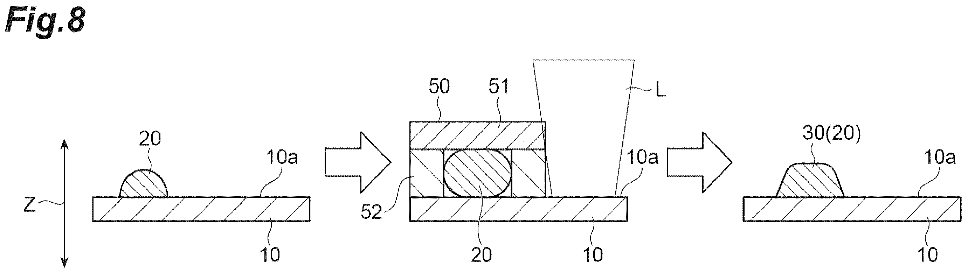

As in a second modification example illustrated in FIG. 8, in the joining step, the laser beam L may be irradiated in a state where the solder 20 is surrounded by a surrounding member 50 in a plan view (when viewed from the irradiation direction of the laser beam L). The surrounding member 50 is formed of a material having a melting point higher than the melting point of the solder 20 and having low joinability with the solder 20. In addition, the surrounding member 50 is formed of a material having transparency with respect to the laser beam L. In this example, the surrounding member 50 is formed of epoxy glass or silicone. The surrounding member 50 includes a pressing portion 51 disposed on a side opposite to the aluminum electrode 10 with respect to the solder 20, and a side wall portion 52 that surrounds the solder 20 in a plan view. The pressing portion 51 and the side wall portion 52 are, for example, integrally formed with each other.

As illustrated in FIG. 8, in this example, the laser beam L is irradiated to the outside of the surrounding member 50, and also in the second modification example, all of the laser beam L is irradiated to the aluminum electrode 10. By irradiating the laser beam L in a state where the solder 20 is surrounded by the surrounding member 50, movement of the molten solder 20 can be suppressed, and the solder 20 can be reliably joined to the aluminum electrode 10 inside the surrounding member 50. In addition, also in the second modification example, similarly to the first modification example, by irradiating the laser beam L in a state where the pressing portion 51 is pressed against the solder 20 to melt the solder 20, movement of the solder 20 in the Z direction can be restricted. That is, the pressing portion 51 can also be regarded as a pressing member that has the same function as the pressing member 40 of the first modification example. In this case, the side wall portion 52 can be regarded as a surrounding member. In the joining step of the second modification example, the laser beam L is irradiated in a state where the pressing portion 51 is in contact with the solder 20 and the solder 20 is surrounded by the side wall portion 52. Accordingly, the solder 20 can be satisfactorily joined to the aluminum electrode 10. In addition, since the pressing portion 51 and the side wall portion 52 are integrally formed, the number of members can be reduced, and the working time can be shortened. Note that in the second modification example, the surrounding member 50 may include only the side wall portion 52 without including the pressing portion 51. Also in the joining step of the second modification example, similarly to the above embodiment, a part of the laser beam L may be irradiated to the aluminum electrode 10, and a remaining part of the laser beam L may be irradiated to the solder 20. In the example of FIG. 8, the laser beam L is irradiated to the aluminum electrode 10 outside the side wall portion 52, but the laser beam L may be irradiated to the aluminum electrode 10 inside the side wall portion 52. In this case, the laser beam L is transmitted through the pressing portion 51 and irradiated to the aluminum electrode 10.

Also with the second modification example, similarly to the above embodiment, the pre-solder 30 can be satisfactorily formed on the aluminum electrode 10. In addition, since the laser beam L is irradiated in a state where the solder 20 is surrounded by the surrounding member 50 in a plan view, movement of the molten solder 20 can be suppressed by the surrounding member 50, and the solder can be joined to the aluminum electrode 10 even more satisfactorily. In addition, since the surrounding member 50 is formed of epoxy glass or silicone, the thermal conductivity of the surrounding member 50 can be lowered, and heat can be suppressed from escaping from the solder 20 via the surrounding member 50. In addition, the heat resistance of the surrounding member 50 can be enhanced, and the surrounding member 50 can be suppressed from being damaged or the like (for example, scorching) due to the temperature during processing. In addition, since the surrounding member 50 has transparency with respect to the laser beam L, it is not necessarily required to irradiate the laser beam L while avoiding the surrounding member 50, and irradiation of the laser beam L can be simplified.

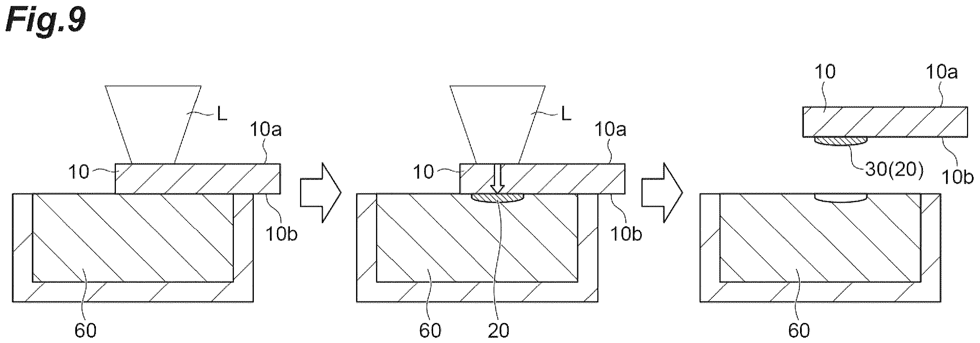

As in a third modification example illustrated in FIG. 9, in the joining step, the laser beam L may be irradiated to a surface 10b of the aluminum electrode 10 on a side opposite to the surface 10a, in a state where the surface 10a of the aluminum electrode 10 is in contact with a solder paste layer 60 which is a base material of the solder 20. In the third modification example, the surface 10b is heated by irradiation of the laser beam L, and the heat is transmitted to the surface 10a, so that a part (solder 20) of the solder paste layer 60 melts. The molten portion of the solder paste layer 60 solidifies and is joined to the surface 10a of the aluminum electrode 10. In the third modification example, since the molten portion (solder 20) of the solder paste layer 60 is surrounded by the non-molten portion of the solder paste layer 60, movement of the molten solder 20 can be suppressed, and the solder 20 can be reliably joined to the aluminum electrode 10. That is, the portion of the solder paste layer 60 that does not melt can also be regarded as a surrounding member that has the same function as the surrounding member 50 of the second modification example.

Also with the third modification example, similarly to the above embodiment, the pre-solder 30 can be satisfactorily formed on the aluminum electrode 10. In addition, since the laser beam L is irradiated to the surface 10b of the aluminum electrode 10 on the side opposite to the surface 10a on which the solder 20 is disposed, it is not necessary to irradiate the laser beam L while avoiding the solder 20, and irradiation of the laser beam L can be simplified.

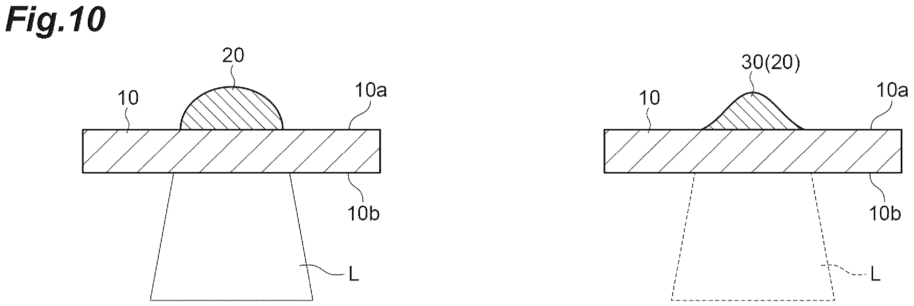

As in a fourth modification example illustrated in FIG. 10, in the joining step, the laser beam L may be irradiated to the surface 10b of the aluminum electrode 10 on the side opposite to the surface 10a. In the fourth modification example, the surface 10b is heated by irradiation of the laser beam L, and the heat is transmitted to the surface 10a, so that the solder 20 melts. The molten solder 20 solidifies and is joined to the surface 10a of the aluminum electrode 10.

Also with the fourth modification example, similarly to the above embodiment, the pre-solder 30 can be satisfactorily formed on the aluminum electrode 10. In addition, since the laser beam L is irradiated to the surface 10b of the aluminum electrode 10 on the side opposite to the surface 10a on which the solder 20 is disposed, it is not necessary to irradiate the laser beam L while avoiding the solder 20, and irradiation of the laser beam L can be simplified.

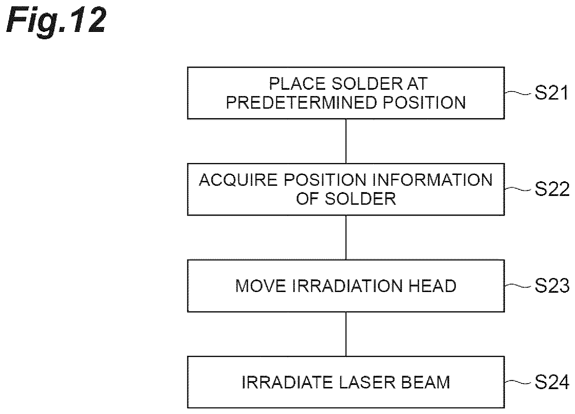

As in a fifth modification example illustrated in FIG. 11, the pre-solder formation apparatus 1 may not include the camera 4. In this case, the control unit 5 controls the irradiation position of the laser beam L from the irradiation head 3 by numerical control instead of image recognition. In this case, as illustrated in FIG. 12, first, the dispenser 6 places (applies) the solder 20 at a predetermined position on the aluminum electrode 10 by a predetermined amount (step S21). Subsequently, the control unit 5 acquires position information of the solder 20 from the dispenser 6 (step S22). Subsequently, the control unit 5 moves the irradiation head 3 to a position corresponding to the solder 20 (step S23). Subsequently, the control unit 5 causes the irradiation head 3 to start irradiation of the laser beam L (step S24). By the above processing, for example, irradiation of the laser beam L is started in a state where all of the laser beam L is irradiated to the aluminum electrode 10. Also with the fifth modification example, similarly to the above embodiment, the solder 20 can be satisfactorily joined to the aluminum electrode 10. Also in the joining step of the fifth modification example, similarly to the above embodiment, a part of the laser beam L may be irradiated to the aluminum electrode 10, and a remaining part of the laser beam L may be irradiated to the solder 20.

The present disclosure is not limited to the above embodiments and modification examples. For example, the materials and shapes of each configuration are not limited to the materials and shapes described above, and various materials and shapes can be adopted. The shape of the irradiation region of the laser beam L is not limited to the circular shape illustrated in FIG. 5, and may be any shape. The shape of the irradiation region of the laser beam L may be a donut shape (annular shape). The shape of the aluminum electrode 10 is not limited to a plate shape, and may be any shape.

In the above embodiment, the laser beam is irradiated so that the amount of energy of the laser beam L irradiated to the aluminum electrode 10 is larger than the amount of energy of the laser beam L irradiated to the solder 20, but the laser beam L may be irradiated so that the amount of energy of the laser beam L absorbed by the aluminum electrode 10 is larger than the amount of energy of the laser beam L absorbed by the solder 20. That is, the laser beam L may be irradiated in further consideration of the absorptance of the laser beam L of the aluminum electrode 10 and the solder 20. The absorptance of the solder 20 is higher than the absorptance of the aluminum electrode 10. The amount of energy of the laser beam L absorbed by the aluminum electrode 10 is an amount obtained by multiplying the amount of energy of the laser beam L irradiated to the aluminum electrode 10 by the absorptance of the laser beam L of the aluminum electrode 10, and the amount of energy of the laser beam L absorbed by the solder 20 is an amount obtained by multiplying the amount of energy of the laser beam L irradiated to the solder 20 by the absorptance of the laser beam L of the solder 20. Also in this case, the solder 20 can be satisfactorily joined to the aluminum electrode 10.

### Reference Signs List

1: pre-solder formation apparatus, 3: irradiation head (irradiation unit), 5: control unit, 10: aluminum electrode, 10a, 10b: surface, 20: solder, 21: flux, 30: pre-solder, 40: pressing member, 50: surrounding member, 51: pressing portion (pressing member), 52: side wall portion (surrounding member), C: center, L: laser beam.

## Claims

1. A pre-solder formation method for forming pre-solder on an aluminum electrode formed of aluminum, the pre-solder formation method comprising:
a placement step of placing solder on the aluminum electrode; and
a joining step of joining the solder to the aluminum electrode by melting and solidifying the solder using a laser beam,
wherein in the joining step, the laser beam is irradiated so that an amount of energy of the laser beam irradiated to the aluminum electrode is larger than an amount of energy of the laser beam irradiated to the solder.

2. The pre-solder formation method according to claim 1,
wherein in the joining step, all of the laser beam is irradiated to the aluminum electrode.

3. The pre-solder formation method according to claim 1,
wherein in the joining step, a part of the laser beam is irradiated to the aluminum electrode, and a remaining part of the laser beam is irradiated to the solder.

4. The pre-solder formation method according to claim 1 or 3,
wherein in the joining step, the laser beam is irradiated so that a center of the laser beam is located outside the solder.

5. The pre-solder formation method according to claim 1 or 3,
wherein in the joining step, the laser beam is irradiated so that an area of the laser beam irradiated to the aluminum electrode is larger than an area of the laser beam irradiated to the solder.

6. The pre-solder formation method according to claim 1 or 2,
wherein in the joining step, the laser beam is irradiated in a state where a pressing member disposed on a side opposite to the aluminum electrode with respect to the solder is in contact with the solder.

7. The pre-solder formation method according to claim 6,
wherein the pressing member has transparency with respect to the laser beam, and
in the joining step, the laser beam is irradiated to a surface of the aluminum electrode on which the solder is disposed, through the pressing member.

8. The pre-solder formation method according to claim 1 or 2,
wherein in the joining step, the laser beam is irradiated in a state where the solder is surrounded by a surrounding member when viewed from an irradiation direction of the laser beam.

9. The pre-solder formation method according to claim 8,
wherein the surrounding member is formed of epoxy glass or silicone.

10. The pre-solder formation method according to claim 8,
wherein the surrounding member has transparency with respect to the laser beam.

11. The pre-solder formation method according to claim 1 or 2,
wherein in the joining step, the laser beam is irradiated in a state where a pressing member disposed on a side opposite to the aluminum electrode with respect to the solder is in contact with the solder and the solder is surrounded by a surrounding member when viewed from an irradiation direction of the laser beam, and
the pressing member and the surrounding member are integrally formed.

12. The pre-solder formation method according to claim 1 or 2,
wherein in the joining step, the laser beam is irradiated to a surface of the aluminum electrode on which the solder is disposed.

13. The pre-solder formation method according to claim 1 or 2,
wherein in the joining step, the laser beam is irradiated to a surface of the aluminum electrode on a side opposite to a surface on which the solder is disposed.

14. The pre-solder formation method according to claim 1 or 2,
wherein in the placement step, the solder containing flux is placed on the aluminum electrode.

15. A pre-solder formation apparatus for forming pre-solder on an aluminum electrode formed of aluminum, the pre-solder formation apparatus comprising:
an irradiation unit that irradiates a laser beam; and
a control unit that controls the irradiation unit,
wherein the control unit causes the irradiation unit to irradiate the laser beam so that an amount of energy of the laser beam irradiated to the aluminum electrode is larger than an amount of energy of the laser beam irradiated to solder disposed on the aluminum electrode, thereby joining the solder to the aluminum electrode by melting and solidifying the solder.
